# EUROPÄISCHE PATENTSCHRIFT

(11) **EP 4 126 300 B1**
(45) Veröffentlichungstag und Bekanntmachung des Hinweises auf die Patenterteilung: **10.09.2025**
(21) Anmeldenummer: 21714818.8
(22) Anmeldetag: 19.03.2021
(51) Int. Cl.: B01D 46/00, B01D 46/02

(54) **FILTERTASCHENBEFESTIGUNGSSYSTEM**
FILTER BAG SECURING SYSTEM
SYSTÈME DE FIXATION POUR POCHES FILTRANTES

(30) Priorität: 24.03.2020 DE 102020001908
(43) Veröffentlichungstag der Anmeldung: 08.02.2023
(73) Patentinhaber: Poh, Ralf, 67434 Neustadt an der Weinstrasse (DE)
(72) Erfinder: Poh, Ralf, 67434 Neustadt an der Weinstrasse (DE)
(74) Vertreter: Hocker, Thomas
(86) Internationale Anmeldenummer: PCT/EP2021/025109
(87) Internationale Veröffentlichungsnummer: WO 2021/190788

(56) Entgegenhaltungen:
- EP-A1- 0 663 228
- EP-A1- 1 883 464
- WO-A1-2006/083239
- JP-A- 2002 006 085

## Beschreibung

Die Erfindung bezieht sich auf ein Filtertaschenbefestigungssystem mit integriertem Halterahmen.

Die Erfindung ist für einen Taschenfilter, umfassend mindestens eine Filtertasche, sowie einen Aufnahmekörper, auch Maske genannt, und einen Stützkörper, auch Kern genannt, bestimmt.

Verwendung finden Taschenfilter in weiten Bereichen der Industrie und Gebäudetechnik. Unter anderem werden sie in Zuluft-Aufbereitung von Lackierprozessen, in der Klima- und Lüftungstechnik, für die Reinigung von Zuluft und Gasen für Kompressoren und Gasturbinen verwendet. Die benötigte Luft für diese Prozesse trägt in der Regel unerwünschte Schmutzpartikel mit sich, welche die Prozesse erheblich beeinträchtigen können. Die Taschenfilter scheiden diesen Schmutz ab und tragen so wesentlich zu einem störungsarmen Betrieb der Anlagen bei. Das eigentliche Filtermedium besteht dabei zumeist aus Vliesstoffen oder Textilien auf Basis von synthetischen Polymerfasern. Es können jedoch auch Glasfasern oder natürliche Fasern wie Baumwolle oder Cellulose zum Einsatz kommen. Diese Medien werden üblicherweise aus einer Lage gefaltet oder aus zwei Lagen kantengleich zusammengelegt und an zwei Seiten bei Falttechnik, beziehungsweise drei der vier Seiten bei Zweilagentechnik miteinander verbunden. Für Medien wie zum Beispiel synthetische Polymerfasern können dabei Schweißprozesse zum Einsatz kommen. Für nicht schweißbare Medien wie Glas, Cellulose oder Baumwolle kann die Verbindung durch Kleben oder Nähen hergestellt werden. Bei allen Herstellungsprozessen entsteht eine Rohtasche, die lediglich an einer der fünf Seiten geöffnet ist. Die Grundform eines fertigen Taschenfilters besteht neben dieser mindestens einen Rohtasche noch aus einem Rahmen, an dem die Tasche befestigt ist. Dieser Rahmen hat neben der Befestigung der Rohtaschen noch die Funktion der sicheren Montage in einem Gehäuse. Im Einsatz fließt der Luft- oder Gasstrom in einem Gehäuse in die offene Seite des Taschenfilters ein und lagert dort Partikel und sonstige Verunreinigungen ab, sodass dem Arbeitsprozess auf der Ausgangsseite saubere Luft oder Gas zugeführt werden.

Die Rahmen bestehen gemäß dem Stand der Technik in der Regel aus Kunststoff-, Metall- oder- Holzprofilen und sind mehrteilig aufgebaut. An den Ecken werden sie durch Gehrungsschnitte ähnlich Fensterprofilen aus dem Baubereich oder spezielle Eckverbindungselemente verbunden. Ferner existieren einstückige, gegossene Rahmen, die in einer offenen oder geschlossenen Form aus flüssigen Formmassen hergestellt werden. Auch existieren zweiteilige Rahmen, die im sogenannten Spritzgussverfahren hergestellt werden. Bei den Profilrahmen werden die Taschen im Anschlussbereich entweder verklebt, durch Gegenprofile verklemmt oder mittels unlösbaren Befestigungselementen wie Tacker-Nadeln oder Klammern befestigt. Die Befestigungsrichtung der Befestigungsmittel ist dabei in der Regel radial zum Luftstrom. Bei den Gussrahmen werden die einzelnen Rohtaschen bis mindestens unter die Rahmenoberkante in die Form eingesetzt und so in der flüssigen Formmasse beim Aushärtevorgang eingebettet. Bei zweiteiligen Spritzgussrahmen werden die Kanten der Rohtaschen ebenfalls wie bei den Profilrahmen verklemmt, allerdings weisen die Enden ohne Umlenkung des Filtermediums in die axiale Richtung der Durchströmung.

Bei Taschenfiltern mit mehr als einer Tasche werden im Zwischenraum der Taschen innerhalb des Rahmens bei der Profiltechnik entweder Stützstangen eingesetzt oder ein spezielles Klemmprofil. Bei den Stützstangen ist es notwendig, die Rohtaschen zunächst an den Kanten zu einem mehrteiligen Satz zu verbinden. Dies kann abhängig vom eingesetzten Filtermedium ebenfalls wieder durch Kleben, Schweißen oder Nähen bewerkstelligt werden. Bei der Verwendung eines speziellen Klemmprofils ist dies, ebenso wie beim zweiteiligen Spritzgussrahmen und beim Gussrahmen, nicht notwendig. Allerdings weisen Gussrahmen andere signifikante Nachteile auf. Durch die überwiegende Verwendung von stark schäumenden Systemen zur Materialersparnis müssen die Formen sehr stabil ausgeführt werden. Ein Fräsen der Gussform aus dem Vollen ist unabdingbar. Weiter müssen die Formen mit einem stabilen Deckel fest verschlossen werden. Dadurch sind die Formen sehr teuer, da für eine effektive Fertigungsweise mit mehreren Arbeitsgängen parallel gearbeitet werden muss. Zudem entstehen hohe Drücke im Inneren der Form, was nach dem Entformen zu Spannungen führt, die sich durch unpräzise äußere Abmessungen bemerkbar machen können. In der Praxis können als Korrekturmaßnahme dann Metallprofile zur Stabilisierung eingesetzt werden, was zum einen einen erheblichen Mehraufwand darstellt und zum anderen das Gesamtelement in der Entsorgung insofern verschlechtert, da es nicht mehr voll Verascht werden kann. Durch die Trennung in der Form am Unterteil und Oberteil kommt es in der Trennebene zu einem nur bedingt steuerbaren Austrieb in Form einer sogenannten Schwimmhaut, die nach dem Aushärteprozess mechanisch durch einen Schneid-, Fräs-, oder Entgrat-Prozess entfernt werden muss, was ebenfalls einen zusätzlichen Aufwand bedeutet. Zudem kann die Schaummasse auch durch das Filtermedium im Bereich der Einbettung penetrieren, was zu einem ungleichmäßigen Erscheinungsbild führt, welches hohes Potential für Kundenreklamationen birgt.

WO 2006/083239 A1 zeigt einen zweiteiligen spritzgegossenen Kunststoff-Filterrahmen für Taschenfilter mit einem Unter- und einem Oberteil, welche über Verriegelungspunkte miteinander verbunden sind. Bei den Verriegelungspunkten handelt es sich um federnde Laschen in dem einen Teil, welche in Aussparungen im anderen Teil eingreifen.

EP 663228 A1 offenbart ein Filtertaschenbefestigungssystem, bei welchem der Aufnahmekörper aus einem recycelten Kunststoff hergestellt wird.

Aus JP 2002-6085 A ist ein Filtertaschenbefestigungssystem, bei welchem mehrere Filtertaschen mittels eines Stützkörpers und eines Aufnahmekörpers positioniert und fixiert werden, bekannt. Stützkörper und Aufnahmekörper sind derart aufeinander abgestimmt, dass die Filtertaschen dazwischen eingeklemmt werden können, wobei der Aufnahmekörper über eine sich verjüngende Zarge verfügt.

EP 1883464 zeigt ein Filtertaschensystem mit Filtertaschen, welche in einem Aufnahmekörper mittels eines Stützkörpers positioniert und fixiert wird. Der Aufnahmekörper ist hierbei eine dünnwandige Maske aus thermoplastischem Kunststoff.

Alle aus dem vorgenannten Stand der Technik bekannten Taschenfilter sind arbeitsintensiv manuell zu montieren. Eine Automatisierung ist nur mit erheblichen Aufwänden zu realisieren und es werden dafür teure Montagemittel benötigt. Die Befestigung der Taschen ist durchgängig unlösbar, weshalb die meisten Rahmenkonzepte lediglich für die einmalige Verwendung konzipiert sind.

Der Erfindung liegt die Aufgabe zugrunde, einen Filtertaschenbefestigungssystem mit integriertem Halterahmen zu schaffen, der einen hohen Grad an Automatisierung ermöglicht.

Die Erfindung wird mittels eines Filtertaschenbefestigungssystems mit den Merkmalen des unabhängigen Vorrichtungsanspruchs und des unabhängigen Verfahrensanaspruch gelöst.

So verfügt das Filtertaschenbefestigungssystems über mindestens eine Filtertasche, welche über eine Öffnung verfügt, einen Aufnahmekörper zur Aufnahme der mindestens einer Filtertasche und mindestens einen Stützkörper. Bei dem Filtertaschenbefestigungssystem wird die mindestens eine Filtertasche mittels des Aufnahmekörpers und des Stützkörpers positioniert und fixiert. Der Aufnahmekörper verfügt über einen Rahmen und mindestens eine Zarge, wobei die Kontur der Zarge an die Kontur der Öffnung der mindestens einen Filtertasche angepasst ist. Der Aufnahmekörper ist eine einteilige, dünnwandige Maske. Die mindestens eine Zarge verjüngt sich vom Rahmen wegweisend, so dass eine Einführschräge entsteht. Die Verjüngung kann hierbei optional nur im Endbereich der Zarge als Einführhilfe erfolgen und ansonsten kann die Zarge senkrecht zum Rahmen verlaufen.

Dabei ist die Maske aus einem thermoplastischen Kunststoff, vorzugsweise Acrylnitril-Butadien-Styrol (ABS), Polypropylen (PP), Polyethersulfon (PES), Polystyrol (PS) oder Polyamid (PA) hergestellt und wird durch Thermoformen in ihre Form gebracht. Das Thermoformen wird auch als Warmformen, Vakuumtiefziehen oder Tiefziehen bezeichnet. Die Maske kann alternativ aus einem Metallblech mittels Tiefziehens hergestellt werden. Die Dicke der Maske beträgt dabei zwischen 0,5 mm und 5 mm. Besonders vorteilhaft ist eine Dicke zwischen 1,5 und 2 mm.

Beim erfindungsgemäßen Verfahren zum Herstellen eines Filtertaschenbefestigungssystem mit mindestens einer Filtertasche, welche über eine Öffnung verfügt, einen Aufnahmekörper zur Aufnahme der mindestens einer Filtertasche und mindestens einem Stützkörper wird zunächst aus einem thermoplastischen Kunststoff mittels Thermoformen oder einem Metallblech mittels Tiefziehen ein Aufnahmekörper in Form einer Maske hergestellt. Hierzu wird der Kunststoff zunächst erwärmt und dann tiefgezogen oder das Metallblech nur tiefgezogen, wodurch mindestens eine Zarge tiefgezogen wird. Im Inneren werden Bereiche ausgestanzt oder ausgefräst; diese Bereiche dienen später der Durchströmung der Filtertaschen. Dann wird die mindestens eine Filtertasche mit ihrer Öffnung über die mindestens eine Zarge gezogen und die mindestens eine Filtertasche wird dann fixiert.

Die Maske verfügt an der Außenkante des Rahmens auf der Seite der mindestens einen Zarge über eine zargenförmige Umrandung.

Die zargenförmige Umrandung ermöglicht, dass der Stützkörper als Gusskörper zustande kommt, welcher zwischen die mindestens eine Zarge und die Umrandung und / oder zwischen zwei Zargen vergossen werden kann. Hierzu eignet sich beispielsweise Polyurethan.

Der Stützkörper und / oder mindestens eine Filtertasche kann auch mit der Maske verschweißt werden. Wird die Filtertasche mit der Maske verschweißt, dient der Stützkörper redundant zur Befestigung, kann leicht wieder entfernt und wiederverwendet werden.

Die zargenförmige Umrandung kann jedoch auch sonst Anwendung finden. So kann ein fester Stützkörper zwischen der mindestens einen Zarge und der Umrandung geklemmt werden. Die Umrandung kann auch lediglich der Versteifung der Maske und / oder dem Schutz des Stützkörpers und / oder der mindestens einen Filtertasche dienen.

Beim erfindungsgemäßen Verfahren erfolgt die Fixierung der mindestens einen Filtertasche durch den Stützkörper, wobei der Stützkörper die Enden der mindestens einen Filtertasche mit der mindestens eine Zarge verbindet. Die mindestens eine Filtertasche, welche über die Einführschräge gezogen ist, wird dann mittels des Stützkörpers fest mit der Maske verbunden.

Der Stützkörper kann um die mindestens eine Zarge vergossen werden oder die mindestens eine Filtertasche kann mit der Maske verschweißt werden.

Die Erfindung wird nun anhand der Figuren detailliert erläutert. Hierbei zeigen:
Figur 1 ein erfindungsgemäßes Filtertaschenbefestigungssystem
Figur 2 dasselbe erfindungsgemäße Filtertaschenbefestigungssystem als Explosionszeichnung
Figur 3 einen Aufnahmekörper des erfindungsgemäßen Filtertaschenbefestigungssystems für eine Einfachverwendung von der Seite, auf welcher die Filtertaschen montiert werden,
Figur 4 einen Aufnahmekörper für eine Mehrfachverwendung auf der den Filtertaschen abgewandten Seite für eine nicht erfindungsgemäße Verschraubung,
Figur 5 einen Aufnahmekörper mit Filtertaschen gemäß einer Variante des erfindungsgemäßen Filtertaschenbefestigungssystems,
Figur 6 den Randbereich eines Aufnahmekörpers gemäß einer ersten Variante der Erfindung,
Figur 7 den Randbereich eines Aufnahmekörpers gemäß einer zweiten Variante der Erfindung in Vergusstechnik,
Figur 8 einen Schnitt durch einen Aufnahmekörper mit Filtertaschen mit einem einteilig eingesetztem Stützkörper etwas perspektivisch,
Figur 9 einen geraden Schnitt durch einen Aufnahmekörper mit Filtertaschen in Vergusstechnik und
Figur 10 einen Randbereich eines Aufnahmekörpers in Vergusstechnik mit überhöhtem Aufnahmekörper.

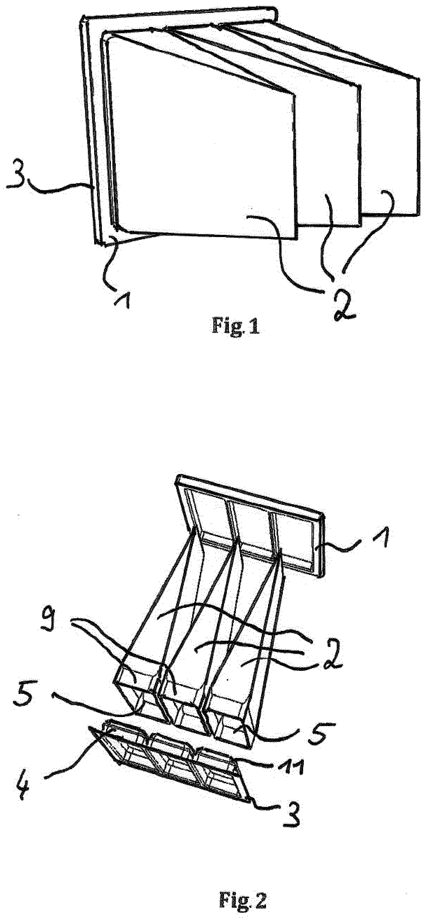

Figur 1 zeigt ein erfindungsgemäßes Filtertaschenbefestigungssystem mit drei Filtertaschen 2, einen Aufnahmekörper 3 zur Aufnahme der Filtertaschen 2 und einem Stützkörper 1. Bei dem Stützkörper 1 handelt es sich um einen fertigen Kern 1 aus Polyurethan. Figur 2 zeigt dieses Filtertaschenbefestigungssystem als Explosionszeichnung.

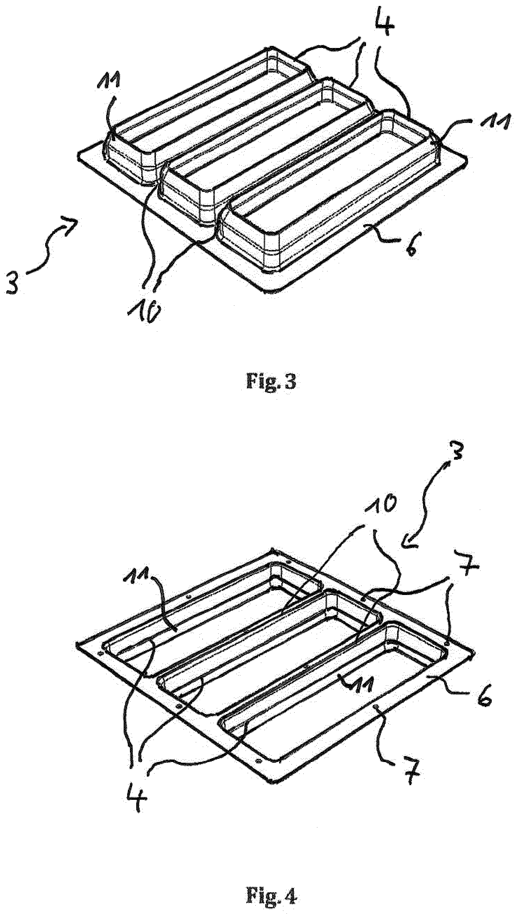

Der Aufnahmekörper 3 ist in den Figuren 3 und 4 detaillierter dargestellt. Der Aufnahmekörper 3 ist eine einteilige, dünnwandige Maske 3. Er verfügt über einen umlaufenden Rahmen 6 und drei dazu im wesentlichen senkrechte Zargen 4. Die dem Rahmen 6 abgewandten Enden der Zargen 4 verfügen über eine Einführschräge 11, so dass die Zargen 4 in diesem Bereich pyramidenförmig verlaufen. Diese Einführschräge 11 dienen bei der Montage der Filtertaschen 2 als Einführhilfe. Zwischen den Zargen 4 befinden sich Querverbindungen 10. Die Maske 3 besteht aus einem thermoplastischen Kunststoff, vorzugsweise Acrylnitril-Butadien-Styrol (ABS), Polypropylen (PP), Polyethersulfon (PES), Polystyrol (PS) oder Polyamid (PA) und wird mittels Thermoformen mit einer Dicke zwischen 1,5 und 2 mm hergestellt.

Figur 3 zeigt eine Maske 3 für die Einfachverwendung. Dies bedeutet, dass die Filtertaschen 2 mit der Maske 3 schwer lösbar zum Beispiel mittels Guss verbunden wird. Die in Figur 4 dargestellte Maske 3 für eine Wiederverwendung unterscheidet sich hiervon durch die Bohrungen 7, durch welche vorzugsweise wieder lösbare Schrauben zur Befestigung eingebracht werden können. Eine derartige Verschraubung fällt nicht unter den Schutz des Patentes.

Bei der Filtertaschen 2 handelt es sich um Polyeder, insbesondere solche mit im Wesentlichen fünf Flächen (Pentaeder), wobei eine Fläche offen ist und somit über eine Öffnung 5 verfügt; vier Flächen dienen somit als Filterflächen. Es handelt sich im Besonderen um gerade Dreiecksprismen, bei denen die seitlichen Dreiecke die parallelen Seiten bilden. Am Ende, an dem sich die Öffnungen 5 befinden, verlaufen die Filtertaschen 2 in einem Verbindungsbereich 9 im Wesentlichen parallel.

Die Filtertaschen 2 werden mittels des Aufnahmekörpers 3 und des Stützkörpers 1 positioniert und fixiert. Die Kontur der Zargen 4 ist an die Kontur der Öffnung 5 der Filtertaschen 2 und der Verbindungsbereiche 9 angepasst, wobei sich wie bereits erwähnt die Zargen 4 vom Rahmen 6 wegweisend am Ende verjüngen.

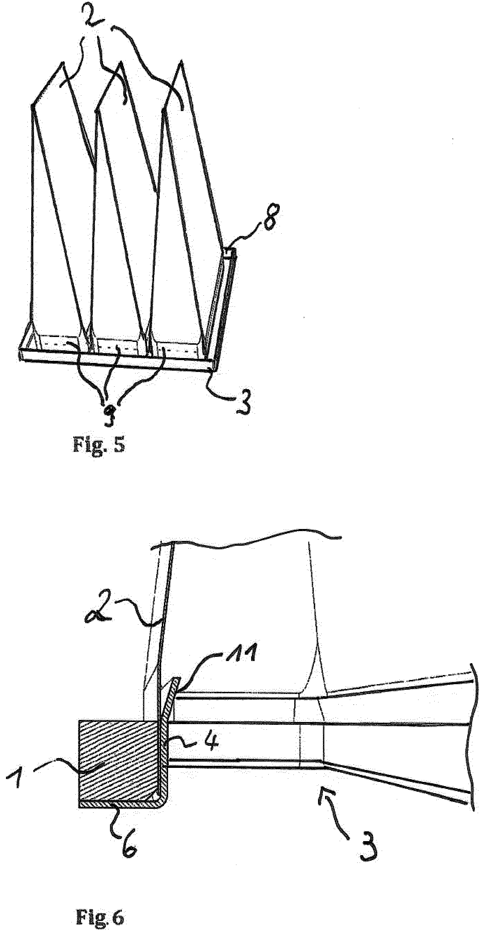

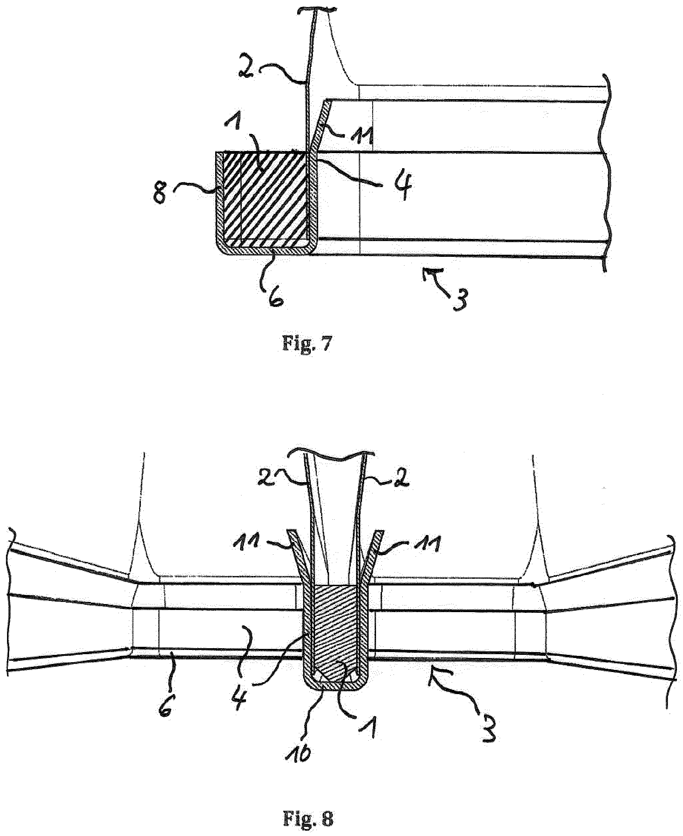

Figur 5 zeigt Filtertaschen 2, welche mit einer Maske 3 verbunden sind. Es ist deutlich zu sehen, dass die Verbindungsbereiche 9 der Filtertaschen 2 über die Zargen 4 gezogen sind. Die Maske 3 verfügt über eine zargenförmige Umrandung 8 an der Außenkante des Rahmens 6 auf der Seite der Zargen 4. Die Verbindung zwischen einer Filtertasche 2 und einer Zarge 4 einer Maske 3 ist detailliert in Figur 7 dargestellt. Durch die Einführschräge 11 an der Zarge 4 lässt sich die Filtertasche 2 einfach über die Zarge 4 ziehen.

Figur 6 zeigt eine Filtertasche 2, welche mit eine einer Maske 3 ohne Umrandung 8 verbunden sind. Hierdurch lässt sich die Filtertasche 2 einfacher bis zum Rahmen 6 ziehen.

Ein fester Stützkörper 1, wie in Figur 2 dargestellt, klemmt die Filtertasche 2 an die Zarge 4. Der Stützkörper 1 kann zusätzlich mit der Maske verschraubt, oder sonst wie verbunden werden.

Figur 8 zeigt eine Maske 3 mit zwei Filtertaschen 2, wobei der Raum zwischen zwei Filtertaschen 2 oberhalb der Querverbindungen 10 mit einem fertig eingesetzten Stützkörper beziehungsweise Kern 1 aus Polyurethan ausgefüllt ist. Durch die Abschrägung der unteren Ecken des Stützkörpers 1 verbleibt - wie bei Figur 6 - in den Rändern ein kleines Luftvolumen. Diese Variante fällt nicht unter den Schutz des Patentes.

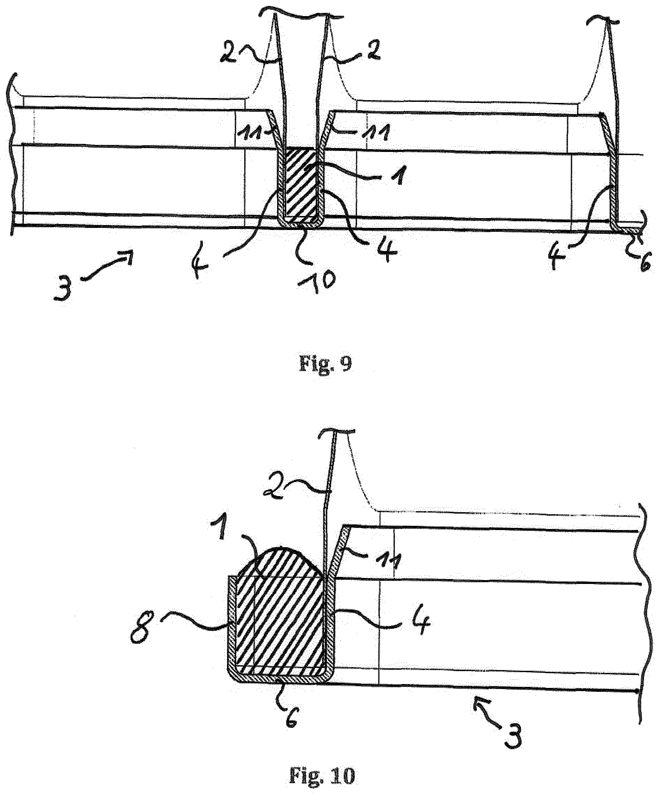

Figur 9 zeigt einen geraden Schnitt durch eine Maske 3 mit Filtertaschen 2. Der Raum oberhalb der Querverbindung ist durch einen vergossenen Stützkörper 1 ausgefüllt.

Figur 10 unterscheidet sich von Figur 7 dadurch, dass der vergossene Kern 1 über die Umrandung 8 hinausragt. Je nach Wahl der Shorehärte kann durch ein Expandieren über das Außenrandbereiches hinaus die Zusatzfunktion der Abdichtung gegen den Aufnahmerahmen des übergeordneten Luftführungssystems realisiert werden.

Beim erfindungsgemäßen Verfahren zum Herstellen eines Filtertaschenbefestigungssystems wird die Maske 3 aus einem thermoplastischen Kunststoff mittels Thermoformen hergestellt. Hierzu wird der Kunststoff zunächst erwärmt und dann tiefgezogen, wodurch bei einer Maske 3 gemäß der Figuren 1 und 2 drei Zargen 4 tiefgezogen werden. Im Inneren der Maske 3 werden ferner Bereiche ausgestanzt. Die Filtertaschen 2 werden mit ihren Öffnungen 5 über die Einführschrägen 11 über die Zargen 4 einer fertigen Maske 3 gezogen und dann fixiert. Die Fixierung der Filtertaschen 2 erfolgt durch Stützkörper 1, welche die Enden der Filtertasche 2 mit den Zarge 4 verbinden.

Der Stützkörper 1 kann beispielsweise bei der in Figur 5 dargestellten Variante um Zargen 4 gegossen werden. Die Bauform lässt jedoch auch einen festen Stützkörper 1 zu, welche in die Maske 3 gedrückt wird.

Eine Maske 3 gemäß Figur 4 wird zumeist mit einem Stützkörper 1 über die Bohrungen 7 verschraubt. Dies fällt nicht unter den Schutz des Patentes.

Die Nachteile des bisherigen Standes der Technik werden durch das erfindungsgemäße Konzept behoben. Die Filtertaschen 2 werden in axialer Richtung der Durchströmung, im Montageprozess von oben auf die Maske 3 aufgesetzt. Die Maske 3 verfügt dazu über eine Einführschräge 11 an den Zargen, was das Zentrieren der Filtertaschen 2 sehr einfach macht. Dieser Vorgang kann entweder manuell oder automatisiert ausgeführt werden. Die Maske 3 verfügt dazu in einer Ausgestaltung am Rahmen 6 über keine äußere Kante, wodurch die Montage- und Zentrierbewegung durchgehend bis zum Maskengrund (Rahmen 6 und Querverbindungen 10) ausgeführt werden kann. In einer zweiten Ausgestaltung der Erfindung - bevorzugt für eine Verguss-Version - ist eine Umrandung 8 vorhanden. Die Masken 3 werden dabei in sogenannter Vakuumtiefziehtechnik ausgeführt. Zum einen hat dies den Vorteil, dass im Bereich der Luftführung in die Filtertaschen 2 durch die Radien Turbulenzen vermieden werden. Bei den bisherigen Systemen sind scharfe Kanten vorhanden, welche Turbulenzen verursachen. Zum anderen führen die Einführschrägen 11 im inneren Bereich die Luft tiefer ins Innere der Filtertaschen 2. Weiter ist die Vakuumtiefziehtechnik eine sehr flexible Fertigung von Masken 3 in unterschiedlichen Materialien wie den gängigen Kunststoffen ABS, PP, PES, PS oder PA möglich. Neben der Materialart kann zudem die Materialstärke in einem weiten Spektrum mit einem Werkzeug variiert werden.

Nachdem die Filtertaschen 2 auf die Masken 3 aufgesetzt wurden, kann die weitere Montage erfolgen. Hierbei stehen mehrere Alternativen zur Verfügung.

Bei dem optionalen System Maske 3 / Filtertaschen 2 / fester Stützkörper 1 für die Einmalverwendung wird der entsprechende Stützkörper 1 als Kern 1 in axialer Richtung der Durchströmung, im Montageprozess von oben, in gleicher Weise wie die Filtertaschen 2 auf die vorzentrierte Masken- 3 / Filtertaschen- 2 Baugruppe aufgesetzt und bis zum Maskengrund geführt. Dabei bildet die Maske 3 mit dem Kern 1 umlaufend um jede Filtertasche 2 einen engen Spalt, der die Filtertaschen 2 sicher verklemmt. Das Spaltmaß kann dabei einfach über die Maße des Kerns 1 an die jeweilige Dicke des Filtertaschenmediums angepasst werden. Ferner kann umlaufend im Spaltbereich eine zusätzliche Verrastung in Form einer Wiederhakenstruktur im Kernquerschnitt abgebildet werden. Ferner kann der Kern 1 unterhalb der Hälfte der Höhe abgesetzt werden, um Platz für überschüssiges Taschenmaterial, welches sich durch die Überstreifbewegung anhäufen kann, zu schaffen. Der Kern 1 kann dabei in unterschiedlicher Weise und diversen Materialien hergestellt werden. Herstellung erfolgt wahlweise aus Hohl- oder Vollprofilen, an den Ecken lösbar oder unlösbar verbunden über Gehrungsschnitte, gerade Schnitte, Profilverbinder oder einteilig aus dem Vollen gefräst, additiv gefertigt oder in einer offenen oder geschlossenen Form als Vollguss oder geschäumt. Materialien in Profiltechnik sind alle Arten von Metallen, Kunststoffen, Hölzern und Verbundmaterialien. Materialien für einteilige Kerne sind ebenfalls die vorgenannten Varianten. Für die additive und Guss-Fertigungsweise sind die entsprechenden Kunststoffe und Metalle. Nachdem dieser Verbund montiert ist, muss er noch fixiert werden. Dazu wird der in axialer Richtung der Durchströmung im Montageprozess von unten mit Einmalbefestigungselementen die Maske mit dem Rahmen unlösbar verbunden. Bei Verwendung eines Kunststoff- oder Holz-Kernen kann dies in nicht erfindungsgemäßer Weise im einfachsten Fall mit Tacker-Nadeln oder Klammern geschehen. Bei Metallen können auch Clinch und Nietverfahren zum Einsatz kommen.

Die Montage des optionalen Systems Maske 3 / Kern 1 für die Mehrfachverwendung geschieht in gleicher Weise wie im vorgenannten Fall, jedoch wird die Verbindung anders realisiert. Die Maske 3 verfügt zusätzlich über mindestens eine Bohrung 7 in der Maske 3 in axialer Richtung der Durchströmung. Durch diese kann mittels mindestens einer Schraube die Maske 3 mit dem Kern 1 lösbar verbunden werden. In diesem Fall kann die Filtertasche 2 nach dem Ende ihrer Verwendbarkeit durch Lösen der entsprechenden Anzahl von Schrauben wieder demontiert werden. Die Filtertaschen 2 werden entsprechend entsorgt, die Maske 3 und der Kern 1 können mehrfach wiederverwendet werden; dabei ergibt sich bereits bei lediglich zweimaliger Verwendung eine deutliche Abfallreduzierung.

Beim System der Masken 3 mit Filtertaschen 2 für die Einmalverwendung kann der Kern 1 mehrfach verwendet werden. Hierzu wird die Baugruppe Maske 3 / Filtertaschen 2 wie zuvor beschrieben hergestellt und zunächst die Maske 3 mit den Filtertaschen 2 in einem separaten Arbeitsgang unlösbar verbunden. Dies kann durch Schweißen, Kleben oder mit entsprechenden Heftklammern bewerkstelligt werden. Dies hat zum einen den Vorteil, dass die Verbindung nicht nur über Klemmen des Filtertaschenmediums sichergestellt wird, sondern auch über mehrere punktuell unlösbaren Verbindungen. Zum Zweiten kann die Kernstruktur wesentlich einfacher gehalten werden, da die Quertraversen zum Klemmen der Filtertaschen 2 im inneren Bereich komplett entfallen können. Wie ebenfalls zuvor beschrieben, kommt dabei wieder eine gebohrte Maske 3 zur Mehrfachverwendung zum Einsatz. Durch die getrennte Befestigung des Taschenmediums an der Maske 3 kann zudem das Spaltmaß vergrößert werden, was die Montage des Kerns 1 zusätzlich deutlich vereinfacht.

Das optionale System Maske 3 / Filtertaschen 2 mit gegossenem Kern 1 eignet sich für Einfachverwendung. Die Maske 3 unterscheidet sich von den vorgenannten Ausführungen durch eine notwendige außen hochgeformte Umrandung 8. Diese bildet eine umlaufende U-förmige Kammer. Nach der Vormontage der Filtertaschen 2 an die Maske 3 wird diese U-förmige Kammer umlaufend und im Verbindungsquerschnitt der Maske 3 bis zur Oberkante außen mit einem flüssigen selbstnivellierenden Formmasse auf Basis Polyurethan vergossen. Diese kann wahlweise solid oder expandierend ausgeführt sein. Je nach Wahl der Shorehärte kann durch ein Expandieren über das Außenrandbereiches hinaus die Zusatzfunktion der Abdichtung gegen den Aufnahmerahmen des übergeordneten Luftführungssystems realisiert werden. Gesonderte Gussformen werden nicht benötigt; dadurch entfällt der sonst bei Gussprozessen obligatorische Entform-Prozess; es können beliebig viele Teile nacheinander hergestellt werden, da keine Formen durch die Aushärtezeit blockiert werden. Es gibt keine Überstände, welche nachträglich manuell entfernt werden müssen. Das Penetrieren in das Filtermedium ist durch die offene Form eliminiert. Es werden keine Metallteile benötigt, da als Verstärkung die Maske 3 dienen kann. Zudem ist für die Formen keine Reinigung notwendig und Trennmittel zum Sicherstellen einer sauberen Entformbarkeit werden ebenfalls nicht benötigt.

Die Erfindung ist nicht auf die beiden Ausführungsbeispiele begrenzt, sondern umfasst auch alle anderen durch die Ansprüche abgedeckten Varianten.

So kann beispielsweise die Maske 3 aus Metallblech mittels Tiefziehens hergestellt werden.

Die Form der Filtertaschen 2, Masken 3 und Kerne 1 ist nicht auf die Ausführungsbeispiele beschränkt.

## Patentansprüche

1. Filtertaschenbefestigungssystem mit mindestens einer Filtertasche (2), welche über eine Öffnung (5) verfügt, einen Aufnahmekörper (3) zur Aufnahme der mindestens einen Filtertasche (2) und mindestens einem Stützkörper (1), bei welchem die mindestens eine Filtertasche (2) mittels des Aufnahmekörpers (3) und des Stützkörpers (1) positioniert und fixiert wird, wobei der Aufnahmekörper (3) über einen Rahmen (6) und mindestens eine Zarge (4) verfügt, die Kontur der Zarge (4) an die Kontur der Öffnung (5) der mindestens einen Filtertasche (2) angepasst ist und die mindestens eine Zarge (4) sich vom Rahmen (6) wegweisend mit einer Einführschräge (11) verjüngt, wobei der Aufnahmekörper (3) eine einteilige, dünnwandige Maske (3) ist, die Maske (3) aus einem thermoplastischen Kunststoff, vorzugsweise Acrylnitril-Butadien-Styrol (ABS), Polypropylen (PP), Polyethersulfon (PES), Polystyrol (PS) oder Polyamid (PA), mittels Thermoformen oder einem Metallblech mittels Tiefziehen hergestellt ist und eine Dicke zwischen 0,5 mm bis 5 mm, besonders bevorzugt zwischen 1,5 und 2 mm aufweist,
**dadurch gekennzeichnet, dass**
die Maske (3) an der Außenkante des Rahmens (6) auf der Seite der mindestens einen Zarge (4) über eine zargenförmige Umrandung (8) verfügt und
der Stützkörper (1) ein Gusskörper, vorzugsweise aus Polyurethan ist, welcher zwischen die mindestens eine Zarge (4) und die Umrandung (8) und / oder zwischen zwei Zargen (4) gegossen wird oder
der Stützkörper (1) und / oder mindestens eine Filtertasche (2) mit der Maske (3) verschweißt wird.

2. Verfahren zum Herstellen eines Filtertaschenbefestigungssystems mit mindestens einer Filtertasche (2), welche über eine Öffnung (5) verfügt, einen Aufnahmekörper (3) zur Aufnahme der mindestens einen Filtertasche (2) und mindestens einem Stützkörper (1) nach Anspruch 1, **wobei** der Aufnahmekörper (3) aus einem thermoplastischen Kunststoff mittels Thermoformen oder einem Metallblech mittels Tiefziehen in Form einer Maske (3) hergestellt wird, indem der Kunststoff zunächst erwärmt und dann tiefgezogen wird, oder das Metallblech tiefgezogen wird, wodurch mindestens eine Zarge (4) tiefgezogen wird, wobei im Inneren Bereiche ausgestanzt oder gefräst werden, die mindestens eine Filtertasche (2) mit ihrer Öffnung (5) über die mindestens eine Zarge (4) gezogen wird und die mindestens eine Filtertasche (2) dann fixiert wird, **dadurch gekennzeichnet, dass**
die Fixierung der mindestens einen Filtertasche (2) durch den Stützkörper (1) erfolgt,
welcher die Enden der mindestens einen Filtertasche (2) mit der mindestens einen Zarge (4) verbindet
und der Stützkörper (1) um die mindestens eine Zarge (4) gegossen wird oder mindestens eine Filtertasche (2) mit der Maske (3) verschweißt wird.

## Claims

1. Filter bag fastening system with at least one filter bag (2) which has an opening (5), a receiving body (3) for receiving the at least one filter bag (2) and at least one support body (1), in which the at least one filter bag (2) is positioned and fixed by means of the receiving body (3) and the support body (1), wherein the receiving body (3) has a frame (6) and at least one flange (4), the contour of the flange (4) is adapted to the contour of the opening (5) of the at least one filter bag (2) and the at least one flange (4) tapers away from the frame (6) with an insertion bevel (11), wherein the receiving body (3) is a one-piece, thin-walled mask (3), the mask (3) is made of a thermoplastic material, preferably acrylonitrile-butadiene-styrene (ABS), polypropylene (PP), polyethersulphone (PES), polystyrene (PS) or polyamide (PA) by thermoforming or a metal sheet by deep drawing and has a thickness of between 0.5 mm and 5 mm, particularly preferably between 1.5 and 2 mm, **characterised in that**
the mask (3) has a flange-shaped border (8) on the outer edge of the frame (6) on the side of the at least one flange (4) and
the support body (1) is a cast body, preferably made of polyurethane, which is cast between the at least one flange (4) and the border (8) and/or between two flange (4), or the support body (1) and/or at least one filter bag (2) is welded to the mask (3).

2. Method for manufacturing a filter bag fastening system with at least one filter bag (2) which has an opening (5), a receiving body (3) for receiving the at least one filter bag (2) and at least one support body (1) according to claim 1, wherein the receiving body (3) is made from a thermoplastic material by thermoforming or from a metal sheet by deep drawing in the form of a mask (3), in that the plastic is first heated and then deep drawn, or the metal sheet is deep drawn, whereby at least one flange (4) is deep drawn, with areas being punched out or milled out in the interior which allow at least one filter bag (2) with its opening (5) over the at least one flange (4) and the at least one filter pocket (2) is then fixed in place, **characterised in that**
the fixing of the at least one filter pocket (2) is effected by the support body (1), which connects the ends of the at least one filter pocket (2) to the at least one flange (4) and the support body (1) is cast around the at least one flange (4) or
at least one filter bag (2) is welded to the mask (3).

## Revendications

1. Système de fixation de poches filtrantes comprenant au moins une poche filtrante (2) qui dispose d'une ouverture (5), un corps de réception (3) destiné à recevoir au moins une poche filtrante (2) et au moins un corps de support (1), dans lequel le au moins un sac filtrant (2) est positionné et fixé au moyen du corps de réception (3) et du corps de support (1), le corps de réception (3) est pourvu d'un cadre (6) et d'au moins un rebord (4), le contour du rebord (4) étant adapté au contour de l'ouverture (5) du sac filtrant - au moins un - (2), et le rebord - au moins un - (4) s'effilant à partir du cadre (6) avec un biseau d'introduction (11), le corps de réception (3) est un masque monobloc à paroi mince, le masque (3) étant constitué d'une matière thermoplastique, de préférence en acrylonitrile-butadiène-styrène (ABS), en polypropylène (PP), en polyéthersulfone (PES), polystyrène (PS) ou polyamide (PA), au moyen d'un thermoformage ou d'une tôle métallique au moyen d'un emboutissage profond et présente une épaisseur comprise entre 0,5 mm et 5 mm, de préférence entre 1,5 et 2 mm, **caractérisé en ce que**
le masque (3) est pourvu, sur le bord extérieur du cadre (6), du côté du ou des au moins un(s) rebord(s) (4), d'une bordure (8) en forme de rebord, et
le corps de support (1) est un corps moulé, de préférence en polyuréthane, qui est coulé entre au moins un rebord (4) et la bordure (8) et/ou entre deux rebords (4) ou
le corps de support (1) et/ou au moins une poche filtrante (2) est soudé au masque (3).

2. Procédé de fabrication d'un système de fixation de poches filtrantes comprenant au moins une poche filtrante (2) qui dispose d'une ouverture (5), un corps de réception (3) destiné à recevoir la ou les poches filtrantes (2) et au moins un corps de support (1) selon la revendication 1, cependant le corps de réception (3) étant fabriqué à partir d'une matière thermoplastique par thermoformage ou d'une tôle métallique par emboutissage profond sous la forme d'un masque (3), en chauffant d'abord la matière plastique puis en l'emboutissant profondément, ou en emboutissant profondément la tôle métallique, ce qui permet d'emboutir profondément au moins un rebord (4), des zones étant découpées ou fraisées à l'intérieur, qui permettent d'emboutir au moins une poche filtrante (2) avec son ouverture (5) est tirée sur au moins un rebord (4) et au moins une poche filtrante (2) est ensuite fixée, **caractérisé en ce que**
la fixation de la poche filtrante - au moins une - (2) est réalisée par le corps de support (1) qui relie les extrémités de la poche filtrante - au moins une - (2) à au moins une bride (4)
et le corps de support (1) est coulé autour du rebord - au moins un - (4) ou au moins un sac filtrant (2) est soudé au masque (3).
